# EUROPÄISCHE PATENTSCHRIFT

(11) **EP 0 688 459 B1**
(45) Veröffentlichungstag und Bekanntmachung des Hinweises auf die Patenterteilung: **21.05.1997**
(21) Anmeldenummer: 94908949.4
(22) Anmeldetag: 03.03.1994
(51) Int. Cl.: G21C 9/004

(54) **WÄRMEABFUHRSYSTEM FÜR EINEN KERNREAKTOR, INSBESONDERE FÜR EINEN DRUCKWASSERREAKTOR**
HEAT DISSIPATION SYSTEM FOR A NUCLEAR REACTOR, IN PARTICULAR A PRESSURIZED WATER REACTOR
SYSTEME DE DISSIPATION DE CHALEUR POUR REACTEURS NUCLEAIRES, NOTAMMENT REACTEURS NUCLEAIRES A EAU SOUS PRESSION

(30) Priorität: 10.03.1993 DE 4307543
(43) Veröffentlichungstag der Anmeldung: 27.12.1995
(73) Patentinhaber: SIEMENS AKTIENGESELLSCHAFT, 80333 München (DE)
(72) Erfinder: LEIDEMANN, Werner, D-90587 Obermichelbach (DE); MACKERT, Pius, D-91058 Erlangen (DE); HARTMANN, Heinz-Werner, D-91054 Buckenhof (DE)
(86) Internationale Anmeldenummer: DE9400234
(87) Internationale Veröffentlichungsnummer: WO9420963

(56) Entgegenhaltungen:
- Patent Abstracts of Japan, Band 14, Nr 214(P-1044); & JP,A,0247586 (TOSHIBA CORP), 1990-02-16
- Patent Abstracts of Japan, Band 3, Nr 88(M-67); & JP,A,5465296 (HITACHI SEISAKUSHO K.K.), 1979-05-25
- Patent Abstracts of Japan, Band 14, Nr 214(P-1044); & JP,A,0247586 (TOSHIBA CORP), 16.02.1990
- Patent Abstracts of Japan, Band 3, Nr 88(M-67); & JP,A,5465296 (HITACHI SEISAKUSHO K.K.), 25.05.1979

## Beschreibung

Die Erfindung bezieht sich auf ein Wärmeabfuhrsystem für einen Kernreaktor, insbesondere für einen Druckwasserreaktor, mit einem Sicherheitsbehälter, der von einer Betonkonstruktion eines Reaktorgebäudes umgeben ist und der seinerseits den Kernreaktor als Containment umgibt und in seinem unteren Bereich ein Sumpfvolumen zur Aufnahme von Kühlwasser aufweist.

Ein solches Wärmeabfuhrsystem soll, dies ist Ausgangspunkt der Erfindung, eine Vergrößerung der inhärenten Sicherheit bei Kernreaktoranlagen ermöglichen, sei es durch Nachrüstung bestehender Kernkraftwerksanlagen, insbesondere des Typs DWR, sei es durch Neukonzeption bei zu errichtenden Kernreaktoranlagen. Das Wärmeabfuhrsystem nach der Erfindung soll sowohl bei sogenannten Auslegungsstörfällen als auch bei auslegungsüberschreitenden Ereignissen seine vorteilhaften Wirkungen entfalten. Insbesondere die in jüngerer Zeit verstärkt in die Betrachtung einbezogenen auslegungsüberschreitenden Ereignisse (Kernschmelzunfälle) erfordern zur Minimierung eventueller Auswirkungen auf die Umgebung systemtechnische Einrichtungen zur Langzeit-Nachwärme-Energieabfuhr aus dem Reaktorsicherheitsbehälter. Ausgehend von dieser Erkenntnis und dem Wärmeabfuhrsystem nach dem Oberbegriff des Anspruchs 1, liegt der Erfindung die Aufgabe zugrunde, dieses so auszubilden, daß auch in dem an sich sehr unwahrscheinlichen Fall des Auftretens einer Kernschmelze die anfallende Nachwärme sicher abgeführt und so ein weiterer Druck- und Temperaturaufbau im Reaktorsicherheitsbehälter vermieden werden kann. Dabei kann ein unerwünschter Druckaufbau schon heute durch das sogenannte Venting (gefilterter Druckabbau) vermieden werden. Durch die Erfindung soll demgegenüber redundant zum Venting eine wesentliche Ursache des Druckaufbaus in ihrer Entstehungsphase, nämlich durch eine Langzeit-Kühlung der entstehenden Nachwärme, bekämpft werden.

Was die Maßnahmen zur langfristigen Wärmeabfuhr aus dem Reaktorsicherheitsbehälter bzw. dem Reaktorgebäudesumpf bei bisherigen bzw. existierenden Anlagen angeht, so werden hierzu die primärseitigen Sicherheitssysteme (Nachkühlkette) herangezogen. Bei Unverfügbarkeit der Nachkühlkette muß dann durch eine dis kontinuierliche, gefilterte Druckentlastung des Reaktorsicherheitsbehälters an die Atmosphäre (die bereits erwähnt wurde) ein weiterer Druckanstieg verhindert bzw. eine Druckabsenkung erreicht werden.

Erfindungsgemäß wird die gestellte Aufgabe bei einem Wärmeabfuhrsystem der eingangs genannten Art mit einem Sicherheitsbehälter , der von einer Betonkonstruktion eines Reaktorgebäudes umgeben ist und der seinerseits den Kernreaktor als Containment umgibt, dadurch gelöst, daß
a) der Sicherheitsbehälterr in einem unteren Bereich ein Sumpfvolumen zur Aufnahme von Kühlwasser aufweist,
b) innerhalb des Sumpfvolumens Kühlrohre eines Sumpfkühlers so angeordnet sind, daß sie zumindest bei weitgehend gefülltem Sumpfvolumen vom Kühlwasser primärseitig bedeckt sind,
c) die Sekundärseite der Kühlrohre über Vor- und Rücklaufleitungen des Sumpfkühlers an einen Zwischenkühler angeschlossen ist,
d) der Zwischenkühler tertiärseitig an eine außerhalb des Reaktorgebäudes angeordnete Wärmesenke angeschlossen ist.

Vorteilhafte Weiterbildungen sind in den Unteransprüchen angegeben.

Die mit der Erfindung erzielbaren Vorteile sind vor allem darin zu sehen, daß das Wärmeabfuhrsystem nach der Erfindung sowohl als aktiv wirkendes als auch als passiv wirkendes System konzipiert werden kann. Es wird vorzugsweise davon ausgegangen, daß bei der zu schützenden Kernreaktoranlage, insbesondere einer DWR-Anlage, die zur Störfallbeherrschung benötigten Borwasservorräte von vorn herein innerhalb des Reaktorgebäudesumpfes gelagert werden. Dieser Borwasservorrat, im unteren Bereich des Reaktorsicherheitsbehälters gelagert, wird vom restlichen Gebäude (Betondecke mit Stahlunterkonstruktion oder reine Stahlkonstuktion) abgetrennt. Diese Deckenkonstruktion dient dabei gleichzeitig zur Aufnahme der/des Sumpfkühler(s), wobei diese/dieser z.B. aus frei verlegten Kühlschlangen bestehen (besteht).

Die Anordnung der Sumpfkühler im oberen Bereich der ständigen Borwasservorlage des Reaktorgebäudesumpfes in Kombination mit einer entsprechenden konstruktiven Gestaltung/Geometrie des Reaktorgebäudesumpfes führt dazu, daß eine selbsttätige Sumpfwasserumwälzung begünstigt wird. Diese kann gegebenenfalls durch zusätzliche Leiteinrichtungen unterstützt werden. Weiterhin kann so auch eine geschützte Verlegung der Wärmetauschereinrichtungen, z.B. Kühlschlangen, sichergestellt werden. Eine innenliegende Kühleinrichtung bietet darüber hinaus erfindungsgemäß den Vorteil, daß das kontaminierte Sumpfwasser nicht nach außen geführt werden muß, die Kühlung also mit Hilfe eines Zwischenkühlkreislaufes durchgeführt wird.

Der Sumpfkühler, dessen Kühlrohre insbesondere in mehrsträngiger Anordnung vorgesehen sein können, ist bevorzugt mit seinen Kühlrohren so ausgebildet und innerhalb eines Kammerraumes entsprechender Steighöhe angeordnet, daß sich im Kühlbetrieb eine Naturumlaufströmung ausbildet.

Der Zwischenkühlkreislauf kann als Naturumlaufkreis ausgebildet sein und/oder es können Mittel zum Zirkulieren des Kühlwassers im Zwischenkühlkreis durch Sumpf- und Zwischenkühler vorgesehen sein. Die Vor- und Rücklaufleitungen des Sumpfkühlers sind vorzugsweise durch die Wand des Sicherheitsbehälters zu einem außerhalb des Sicherheitsbehälters angeordneten Zwischenkühler geführt. Die Vor- und Rücklaufleitungen sind zweckmäßigerweise jeweils absperrbar und hierzu vorzugsweise in einem außerhalb des Sicherheitsbehälters gelegenen Leitungsbereich mit mindestens je einem Absperrventil versehen. Gemäß einer Weiterbildung der Erfindung wird in den Zwischenkühlkreislauf, der von Sumpf- und Zwischenkühler und den beide Kühler verbindenden Vor- und Rücklaufleitungen gebildet wird, eine Zwischenkühlpumpe eingeschaltet. Die Zwischenkühlpumpe kann günstigerweise in einen Zweig der Rücklaufleitung eingefügt sein, der außerhalb des Sicherheitsbehälters sowie zwischen einem Absperrventil und dem sekundärseitigen Einlaß des Zwischenkühlers liegt.

Eine bevorzugte Ausführungsform besteht darin, daß Absperrventile, Zwischenkühler, Zwischenkühlpumpe und die verbindenden Kreislaufleitungen innerhalb eines Reaktorgebäude-Ringraums angeordnet sind, welcher außerhalb des Sicherheitsbehälters und innerhalb des Reaktorgebäudes liegt.

Auch für die Tertiärseite des Wärmeabfuhrsystems gilt, daß diese sowohl als aktiv wirkendes als auch als passiv wirkendes System ausgebildet werden kann. Die Ausführung eines aktiv wirkenden Wärmeabfuhrsystems besteht in diesem Zusammenhang darin, daß die Tertiärseite des Zwischenkühlers über eine Umwälzpumpe und entsprechende Vor- und Rücklaufleitungen an die externe Wärmesenke, z.B. einen Fluß oder Kühlteich, angeschlossen ist.

Wenn der über eine externe Wärmesenke geführte Tertiärkreis des Zwischenkühlers zum Betrieb nach dem Naturumlaufprinzip eingerichtet ist, dann ist es besonders günstig, einen Naturzugkühlturm bzw. Luftkühler als externe Wärmesenke zu verwenden.

Weitere Merkmale und Vorteile der Erfindung werden im folgenden anhand einer Zeichnung, in welcher drei Ausführungsbeispiele dargestellt sind, noch näher erläutert. In der Zeichnung zeigt in vereinfachten Schaltungsdiagrammen (unter Fortlassung der für das Verständnis der Erfindung nicht wesentlichen Teile):
- Figur 1: ein erstes Wärmeabfuhrsystem für eine Kernreaktoranlage, insbesondere einen Druckwasserreaktor, welche im sekundären und tertiären Kühlkreis mit Zwangsumlauf arbeitet und im primären Kühlkreis des Sumpfkühlers zumindest mit einem partiellen Naturumlauf arbeitet;
- Figur 2: eine zweite Ausführung eines Wärmeabfuhrsystems für eine Kernreaktoranlage, insbesondere eine DWR-Anlage, das im sekundären und tertiären Kühlkreis mit einer Naturumlauf-Umwälzung des Kühlmittels arbeitet, wobei im Primärkreis des Sumpfkühlers zumindest ein partieller Naturumlauf des Kühlmittels stattfinden kann, und
- Figur 3: eine dritte Version des Wärmeabfuhrsystems nach der Erfindung, bei welcher im Vergleich zum Beispiel nach Figur 2 der Naturumlauf im Primärkreis durch Leitwände forciert ist und auf der Tertiärseite als externe Wärmesenke mit einem Kühlteich (oder Flußbett) gearbeitet wird.

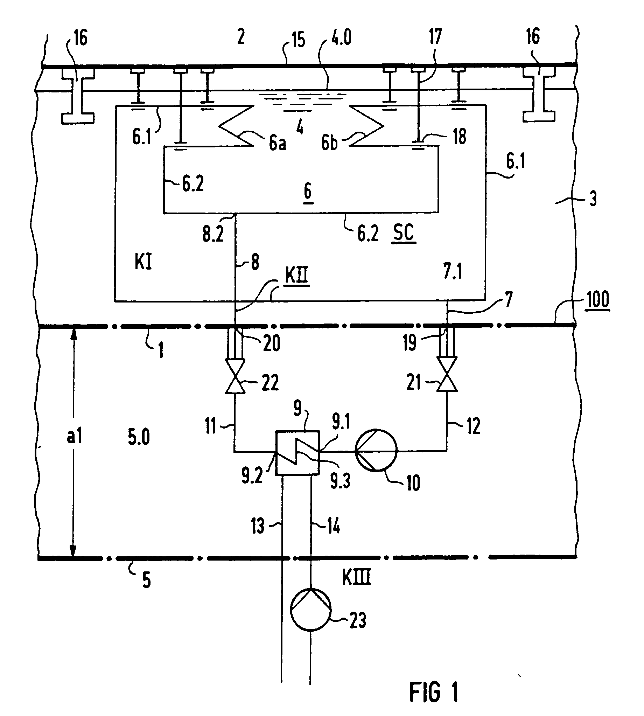

In Figur 1 symbolisiert die starke, strichpunktierte Linie 1 die - als Wandpartie ausschnittsweise dargestellte - Stahldichthaut eines Reaktorsicherheitsbehälters, der z.B. kugelförmig oder zylindrisch sein kann und der in seinem Inneren das sogenannte Containment 2 enthält. Die dargestellte Wandpartie 1 des Reaktorsicherheitsbehälters 100 ist die bodenseitige, und oberhalb dieser bodenseitigen Wandpartie befindet sich ein ebenfalls im Ausschnitt dargestelltes Sumpfvolumen 3 zur Aufnahme von Kühlwasesr 4. Das Sumpfvolumen 3 kann während des Normalbetriebes des Reaktors, beispielsweise bis zum Spiegel 4.0 mit Kühlwasser angefüllt sein; es ist auch ein niedrigerer Sumpfwasserstand möglich, der erst bei einem Störfall entsprechend aufgefüllt wird, oder es ist auch ein Betrieb möglich, bei dem sich das Sumpfvolumen 3 erst bei sich anbahnendem Störfall mit Sumpfwasser anfüllt. Das Containment 2 mit seinem einhüllenden Sicherheitsbehälter 100 wird umgeben von den Wänden des Reaktorgebäudes, von denen eine Wandpartie 5 ebenfalls stark ausgezogen und strichpunktiert dargestellt ist. Die Wandpartie 5 des Reaktorgebäudes hat einen Abstand a1 zur Stahldichthaut 1, z.B. 1 m bis zu mehreren Metern, so daß sich zwischen beiden Wandpartien 1, 5 ein sogenannter Reaktorgebäude-Ringraum 5.0 ergibt, der unter Unterdruck gehalten wird, um eventuelle Leckagen an der Stahldichthaut 1 detektieren zu können. Innerhalb des Containments 2 herrscht im Normalbetrieb Atmosphärendruck.

Eine bekannte Reaktoranlage, für welche die Erfindung einsetzbar ist, ist z.B. in der DE-A1 40 41 295 dargestellt und beschrieben. Dort ist in den Figuren 1 bis 3 eine Kernreaktoranlage mit einem sogenannten Core-Catcher dargestellt, bei welcher im Kernschmelzfalle die Kernschmelze in einem Auffangbehälter unterhalb des Reaktordruckbehälters aufgefangen und der Auffangbehälter an seiner Außenseite mittels Kühlwasser aus dem Reaktorsumpf, vorzugsweise im Naturumlauf, gekühlt wird. Zusätzlich wird die Kernschmelze auch an ihrer Oberseite durch einen Kühlwasserfilm gekühlt, und diese Kühlung wird ebenfalls durch das Sumpfkühlwaser gespeist. Die auf diese Weise vom Sumpfkühlwasser aufgenommene Nachzerfallswärme wird nun auf vorteilhafte Weise gemäß der Erfindung abgeführt, wozu zunächst wiederum auf Figur 1 bezug genommen wird. Innerhalb des Sumpfvolumens 3 sind die Kühlrohre 6 eines Sumpfkühlers SC so angeordnet, daß sie zumindest bei weitgehend gefülltem Sumpfvolumen 3 vom Kühlwasser 4 (wie dargestellt) primärseitig bedeckt sind. Es sind zwei zueinander parallel geschaltete Kühlrohrgruppen 6a, 6b dargestellt, deren erste Stränge 6.1 am gemeinamen Leitungspunkt 7.1 zusammengeführt sind und in die Saugleitung 7 münden. Die zweiten Leitungsstränge 6.2 der Kühlrohre 6 laufen im Leitungspunkt 8.2 zusammen und gehen in die gemeinsame Druckleitung 8 über. Im dargestellten Fall kann man von zwei Loops 6a, 6b und vier Strängen sprechen, wobei die Kühlrohre, wie schematisch angedeutet, zur Erzielung möglichst großer wärmetauschender Flächen, wie bekannt, z.B. spiralig oder mäanderförmig verlaufen können. Der Sumpfkühler SC kann auch mehr als zwei Loops, z.B. drei oder vier oder noch mehr, aufweisen und dementsprechend auch mehr als vier Stränge 6.1, 6.2.

Die Sekundärseite der Kühlrohre 6 ist über die Vorlaufleitung (Saugleitung) 7 und die Rücklaufleitung (Druckleitung) 8 des Sumpfkühlers SC an einen Zwischenkühler 9 angeschlossen, wobei Mittel 10, 11, 12 zum Zirkulieren des Kühlwassers im Zwischenkreislauf durch Sumpf- und Zwischenkühler SC, 9 vorgesehen sind. Der Zwischenkühler 9 ist tertiärseitig über die Leitungen 13, 14 an eine außerhalb des Reaktorgebäudes (Wand 5) angeordnete, in Figur 1 nicht dargestellte Wärmesenke angeschlossen. Dabei kann es sich z.B. um einen Fluß oder einen Kühlteich handeln.

Dargestellt ist in Figur 1, daß das Sumpfvolumen 3 einen Wasservorrat enthält, in diesem Fall einen Borwasservorrat, und daß ein das Sumpfvolumen 3 begrenzender Kammerraum mittels einer Deckenkonstruktion 15 abgedeckt ist. Es ist an beiden Enden des dargestellten Sumpfvolumens 3 je ein kräftiger Doppel-T-Träger 16 gezeigt, wobei sich diese Träger an der aus Figur 1 nicht ersichtlichen Betonstruktur des Containments abstützen. Die Deckenkonstruktion 15 ist im dargestellten Fall als tragende Stahlkonstruktion ausgebildet. Sie kann auch eine stahlarmierte, tragende Betondecke sein. Vorteilhafterweise sind an der Deckenkonstruktion 15 die Rohre 6 des Sumpfkühlers SC gehaltert, wie es durch die Rohrhalte-Hänger 17 symbolisiert ist, welche jeweil mit ihren oberen Enden an der Deckenkonstruktion 15 befestigt, z.B. angeschweißt, sind und mit ihren unteren Enden an die die Kühlrohre 6 umfassenden Rohrhülsen 18 angeschlossen sind. Zur Erreichung einer erdbebensicheren Konstruktion können die Hänger 17 auch noch mit Querstreben versteift und miteinander verbunden sein (nicht dargestellt).

Die Vor- und Rücklaufleitungen 7, 8 des Sumpfkühlers SC sind durch die Wand des Sicherheitsbehälters 1 zum Zwischenkühler 9 hindurchgeführt. Die Wanddurchführungen sind mit 19 und 20 bezeichnet. Die Vor- und Rücklaufleitungen 7, 8 sind jeweils absperrbar und hierzu - vorzugsweise in einem außerhalb des Sicherheitsbehälters 1 gelegenen Leitungsbereich - mit mindestens je einem Absperrventil 21, 22 versehen. In den von Sumpf- und Zwischenkühler SC, 9 und den beide Kühler verbindenden Vor- und Rücklaufleitungen 8, 7 gebildeten Zwischenkühlkreis KII ist eine Zwischenkühlpumpe 10 eingeschaltet. Diese ist in einen Zweig 12 der Rücklaufleitung 7 eingefügt, der außerhalb des Sicherheitsbehälters 1 sowie zwischen einem Absperrventil 21 und dem sekundärseitigen Einlaß 9.1 des Zwischenkühlers 9 liegt. Der sekundärseitige Auslaß des Zwischenkühlers 9 ist mit 9.2 bezeichnet, seine zwischen 9.1 und 9.2 schematisch angedeuteten wärmetauschenden Rohre mit 9.3. Zwischen dem sekundärseitigen Auslaß 9.2 und einem weiteren Absperrventil 22 befindet sich der vorlaufseitige Leitungsabschnitt 11. Wie man sieht, sind die Absperrventile 21, 22, der Zwischenkühler 9, die Zwischenkühlpumpe 10 und die verbindenden Kreislaufleitungen 11, 12 innerhalb des Reaktorgebäude-Ringraums 5.0 angeordnet, welcher außerhalb des Sicherheitsbehälters 1 und innerhalb des Reaktorgebäudes 5 liegt. Das dargestellte Wärmeabfuhrsystem hat auf diese Weise den Vorteil, daß das im Sumpfkühler SC enthaltene, vorzugsweise borierte, Kühlwasser 4, welches die Primärseite KI des Wärmeabfuhrsystems bildet, innerhalb des Sicherheitsbehälters 1 verbleibt. Dies ist deshalb günstig, weil während der sich über einen längeren Zeitraum von mehreren Tagen bis zu mehreren Wochen erstreckenden Kühlung der Kernschmelze sich im Kühlwasser naturgemäß Zerfallsprodukte ansammeln. Diese können später, wenn die Kernschmelze erstarrt ist und eine Kühlung nicht mehr erforderlich ist, durch Auspumpen des Sumpfkühlers entfernt werden. Der Zwischenkühlkreis KII ist in sich geschlossen, wie dargestellt, und wird bei Betrieb der Pumpe 10 im Kreislauf betrieben. Es ist auch ein Kreislaufbetrieb im Naturumlauf möglich, wie es noch erläutert wird. Sollte ein Leck an den Kühlrohren 6, 6.1, 6.2 auftreten und damit eine gewisse Menge kontaminierten Kühlwassers in den Zwischenkühlkreis eindringen, so kann trotzdem nichts nach außen dringen, weil die nächste Barriere die Rohre des Zwischenkühlers 9 sind; diese lassen kein kontaminiertes Zwischenkühlmedium zur Tertiärseite KIII durch.

In Figur 1 ist in die Rücklaufleitung 14 der Tertiärseite eine Umwälzpumpe 23 eingeschaltet; diese würde ebenso wie die Zwischenkühlpumpe 10 im Kühlbetrieb als Dauerläufer arbeiten, so daß die anfallende Nachzerfallswärme von der Primärseite KI über den Zwischenkreis KII zur Tertiärseite KIII transportiert würde, also zur externen Wärmesenke (Fluß, Kühlteich, Luftkühler oder Kühlturm).

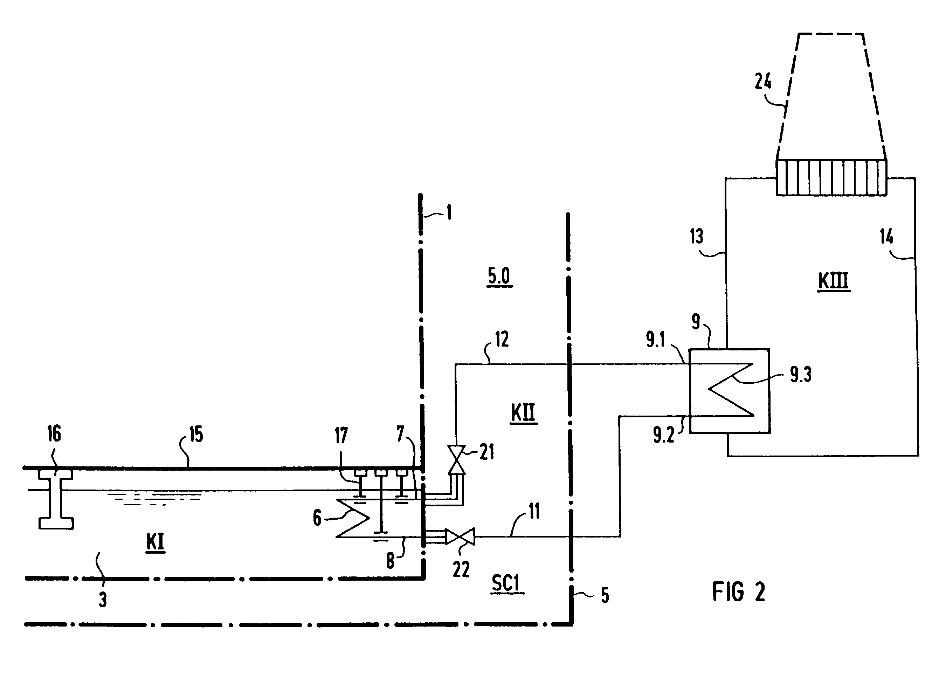

Das Wärmeabfuhrsystem nach Figur 2 ist so ausgebildet, daß die Umwälzung des Kühlmittels im Zwischenkühlkreis KII nach dem Naturumlaufprinzip erfolgt, bei entsprechend vorgesehener geodätischer Höhe des Zwischenkühlers 9 relativ zum Sumpfkühler SC1. Die externe Wärmesenke 24 ist als Luftkühler bzw. Kühlturm ausgebildet; der Tertiärkreis bzw. die Tertiärseite KIII umfaßt die Mantelseite des Zwischenkühlers 9, seine Vorlaufleitung 13, die externe Wärmesenke 24 und die Rücklaufleitung 14. Dieser Tertiärkreis ist gleichfalls zum Betrieb nach dem Naturumlaufprinzip erfindungsgemäß eingerichtet, wozu für eine entsprechende geodätische Höhendifferenz zwischen Zwischenkühler und externer Wärmesenke 24 gesorgt wird (z.B. Höhendifferenz von 5 bis 10m).
Für den Sumpfkühler SC1 nach Figur 2 (wie auch für den Sumpfkühler SC nach Figur 1) gilt, daß es besonders vorteilhaft ist, diesen mit seinen Kühlrohren 6 so auszubilden und innerhalb des Kammerraumes 3 entsprechender Steighöhe so anzuordnen, daß sich im Kühlbetrieb eine Naturumlaufströmung ausbildet. Der Zwischenkühler 9 nach Figur 2 kann innerhalb des Ringraumes 5.0 angeordnet sein oder (wie dargestellt) außerhalb dieses Ringraumes 5.0. Die Anordnung innerhalb des Ringraumes 5.0 hat den Vorteil, daß außerhalb des Reaktorgebäudes 5 nur noch der Tertiärkreis KIII angeordnet ist.

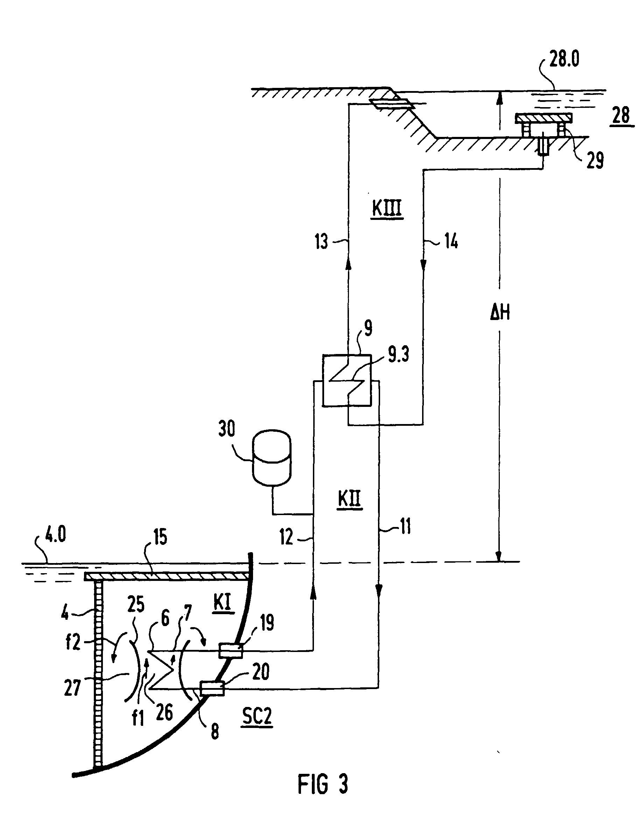

Figur 3 zeigt, daß zur Unterstützung des Naturumlaufs bei dem dort dargestellten Sumpfkühler SC2 den Kühlrohren 6 Leiteinrichtungen 25 zugeordnet sind, so daß schachtartige Strömungszonen 26 für eine Aufwärtsströmung im Wärmetausch mit den Kühlrohren 6 und außerhalb dieser Strömungszonen 26 Abwärts-Strömungszonen 27 gebildet sind. Die entsprechenden Strömungspfeile sind mit fl (aufwärts) und f2 (abwärts) bezeichnet. Die Leiteinrichtungen 25 haben etwa die Gestalt eines Rotations-Hyperboloids. Im Beispiel nach Figur 3 ist der Wasserstand 4.0 etwas höher als die Deckenkonstruktion 15 gezeichnet, dieser Zustand kann betriebsbedingt eintreten oder von vorne herein vorgesehen sein. Im übrigen entspricht das Wärmeabfuhrsystem nach Figur 3 weitgehend demjenigen nach Figur 2. Die Steighöhe für den Zwischenkühler 9 beträgt in diesem Beispiel ca. 10 m, was der Hälfte der Höhendifferenz zwischen dem unteren Wasserspiegel 4.0 des Sumpfkühlers SC2 und dem Wasserspiegel 28.0 des oberen Kühlteiches 28 entspricht. Diese Höhendifferenz ist mit AH bezeichnet. An die Vorlaufleitung 12 des Zwischenkühl- oder Sekundärkreises KII ist ein Ausgleichsbehälter 30 angeschlossen.

Die Rücklaufleitung 14 auf der Tertiärseite KIII ist an den Kühlteich 28 über eine Filterstrecke 29 angeschlossen.

Im Wärmeabfuhrbetrieb wird das Kühlwasser 4 im Sumpfkühler SC2 durch Aufnahme der Nachzerfallswärme der Kernschmelze aufgewärmt und gibt seine Wärme an die Kühlrohre 6 des Sumpfkühlers ab. Hierdurch wird ein Naturumlauf innerhalb des Sumpfkühlers SC2 angefacht, und es baut sich eine Strömung gemäß den Strömungspfeilen f1, f2 auf. Das sekundäre Kühlmittel im Zwischenkühlkreis KII wird im Bereich des Vorlaufstrangs 7 stärker aufgewärmt als im Bereich des Rücklaufstranges 8, weil sich relativ wärmere Kühlwasserschichten im Bereich dieser Vorlaufleitung 7 befinden. Infolge dessen wird ein Naturumlauf auch im Zwischenkühlkreis angefacht; das relativ wärmere Wasser steigt in der Vorlaufleitung 12 auf, kühlt sich im Zwischenkühler 9 ab und "fällt" dann in der Rücklaufleitung 11 wieder zurück in den rücklaufseitigen Strang 8 des Sumpfkühlers SC2. Auf entsprechende Weise wird auf der Tertiärseite ein Naturumlauf angefacht, indem relativ wärmere Wassermengen in der Vorlaufleitung 13 aufsteigen und in den Kühlteich 28 strömen, wo sie sich mit den kühleren Wassermassen vereinigen. Relativ kühleres Kühlwasser strömt dann über das Filter 29 durch die Rücklaufleitung 14 in die wärmetauschenden Rohre 9.3 des Zwischenkühlers 9 nach. Dieser Naturumlauf in den Primär-, Sekundär- und Tertiär-Systemen KI bis KIII ist inhärent sicher und führt zu einer wirksamen Abfuhr der Nachzerfallswärme in die relativ große Wärmesenke 28 eines Kühlteiches oder eines Flusses. - Das Anfachen der NaturumlaufStrömung beim Wärmeabfuhrsystem nach Figur 2 geschieht entsprechend, wie anhand der Figur 3 beschrieben.

Beim Wärmeabfuhrsystem nach Figur 1 kann auf der Primärseite KI (Sumpfkühler SC) vorteilhafterweise auch eine Naturumlauf-Umwälzung des Kühlwassers 4 vorgesehen sein, und auf der Sekundär- sowie Tertiärseite KII, KIII ist hier ein Zwangsumlauf mit Umwälzpumpen vorgesehen. Um hier die nötige Sicherheit der Wärmeabfuhr herbeizuführen, ist es zweckmäßig, mehrere jeweils zueinander parallel geschaltete Pumpen 10 und Pumpen 23 vorzusehen (nicht dargestellt).

## Patentansprüche

1. Wärmeabfuhrsystem für einen Kernreaktor, insbesondere für einen Druckwasserreaktor, mit einem Sicherheitsbehälter (100), der von einer Betonkonstruktion eines Reaktorgebäudes (5) umgeben ist und der seinerseits den Kernreaktor als Containment (2) umgibt, wobei
a) der Sicherheitsbehälter (100) in einem unteren Bereich ein Sumpfvolumen (3) zur Aufnahme von Kühlwasser (4) aufweist,
b) innerhalb des Sumpfvolumens (3) Kühlrohre (6) eines Sumpfkühlers (SC; SC1, SC2) so angeordnet sind, daß sie zumindest bei weitgehend gefülltem Sumpfvolumen (3) vom Kühlwasser (4) primärseitig bedeckt sind,
c) die Sekundärseite (KII) der Kühlrohre (6) über Vor- und Rücklaufleitungen (7, 12; 8, 11) des Sumpfkühlers (SC; SC1; SC2) an einen Zwischenkühler (9) angeschlossen ist,
d) der Zwischenkühler (9) tertiärseitig an eine außerhalb des Reaktorgebäudes (5) angeordnete Wärmesenke (24; 28) angeschlossen ist.

2. Wärmeabfuhrsystem nach Anspruch 1,
**dadurch gekennzeichnet**, daß das Sumpfvolumen (3) einen Borwasservorrat enthält.

3. Wärmeabfuhrsystem nach Anspruch 1 oder 2,
**dadurch gekennzeichnet**, daß ein das Sumpfvolumen (3) begrenzender Kammerraum mittels einer Deckenkonstruktion (15) abgedeckt ist.

4. Wärmeabfuhrsystem nach Anspruch 3,
**dadurch gekennzeichnet**, daß an der Deckenkonstruktion (15) die Kühlrohre (6) des Sumpfkühlers (SC) gehaltert sind.

5. Wärmeabfuhrsystem nach Anspruch 3 oder 4,
**dadurch gekennzeichnet**, daß die Deckenkonstruktion (15) als tragende Stahlkonstruktion ausgebildet ist.

6. Wärmeabfuhrsystem nach Anspruch 3 oder 4,
**dadurch gekennzeichnet**, daß die Deckenkonstruktion (15) als stahlarmierte, tragende Betondecke ausgebildet ist.

7. Wärmeabfuhrsystem nach einem der Ansprüche 1 bis 6,
**dadurch gekennzeichnet**, daß die Kühlrohre (6) des Sumpfkühlers (SC) in mehrsträngiger Anordnung vorgesehen sind.

8. Wärmeabfuhrsystem nach einem der Ansprüche 1 bis 7,
**dadurch gekennzeichnet**, daß der Sumpfkühler (SC) mit seinen Kühlrohren (6) so ausgebildet und innerhalb eines Kammerraumes entsprechender Steighöhe angeordnet ist, daß sich im Kühlbetrieb eine Naturumlaufströmung ausbildet.

9. Wärmeabfuhrsystem nach Anspruch 8,
**dadurch gekennzeichnet**, daß zur Unterstützung des Naturumlaufs den Kühlrohren (6) Leiteinrichtungen (25) zugeordnet sind, so daß schachtartige Strömungszonen (26) für eine Aufwärtsströmung im Wärmetausch mit den Kühlrohren (6) und außerhalb dieser Strömungszonen Abwärts-Strömungszonen (27) gebildet sind.

10. Wärmeabfuhrsystem nach einem der Ansprüche 1 bis 9,
**dadurch gekennzeichnet**, daß der Zwischenkühler (9) außerhalb des Sicherheitsbehälters (100) angeordnet ist und die Vor- und Rücklaufleitungen (7, 12; 8, 11) des Sumpfkühlers (SC, SC1, SC2) durch die Wand (1) des Sicherheitsbehälters (100) zu dem Zwischenkühler (9) geführt sind.

11. Wärmeabfuhrsystem nach Anspruch 10,
**dadurch gekennzeichnet**, daß die Vor- und Rücklaufleitungen (7, 12; 8, 11) jeweils absperrbar und hierzu vorzugsweise in einem außerhalb des Sicherheitsbehälters (100) gelegenen Leitungsbereich mit mindestens je einem Absperrventil (21, 22) versehen sind.

12. Wärmeabfuhrsystem nach einem der Ansprüche 1 bis 11,
**dadurch gekennzeichnet**, daß Mittel (10, 11, 12) zum Zirkulieren des Kühlwassers (4) im Zwischenkühlkreis durch Sumpf- und Zwischenkühler (SC; 9) vorgesehen sind.

13. Wärmeabfuhrsystem nach Anspruch 12,
**dadurch gekennzeichnet**, daß in den von Sumpf- und Zwischenkühler (SC, 9) und den beide Kühler (SC; 9) verbindenden Vor- und Rücklaufleitungen (7, 12; 8, 11) gebildeten Zwischenkreislauf (KII) eine Zwischenkühlpumpe (10) eingeschaltet ist.

14. Wärmeabfuhrsystem nach Anspruch 13,
**dadurch gekennzeichnet**, daß die Zwischenkühlpumpe (10) in einen Zweig (12) der Rücklaufleitung eingefügt ist, der außerhalb des Sicherheitsbehälters (100) sowie zwischen einem Absperrventil (21) und dem sekundärseitigen Einlaß (9.1) des Zwischenkühlers (9) liegt.

15. Wärmeabfuhrsystem nach Anspruch 13 oder 14,
**dadurch gekennzeichnet**, daß Absperrventile (21, 22), Zwischenkühler (9), Zwischenkühlpumpe (10) und die verbindenden Kreislaufleitungen (11, 12) innerhalb eines Reaktorgebäude-Ringraumes (5.0) angeordnet sind, welcher außerhalb des Sicherheitbehälters (100) und innerhalb des Reaktorgebäudes (5) liegt.

16. Wärmeabfuhrsystem nach einem der Ansprüche 1 bis 15,
**dadurch gekennzeichnet**, daß die Tertiärseite (KIII) des Zwischenkühlers (9) über eine Umwälzpumpe (23) und entsprechende Vor- und Rücklaufleitungen (13, 14) an die externe Wärmesenke, z.B. einen Fluß oder Kühlteich, angeschlossen ist.

17. Wärmeabfuhrsystem nach einem der Ansprüche 1 bis 16,
**gekennzeichnet durch** die Umwälzung des Kühlmittels im Zwischenkühlkreis (KII) nach dem Naturumlaufprinzip bei entsprechend vorgesehener geodätischer Höhe des Zwischenkühlers (9) relativ zum Sumpfkühler (SC1, SC2).

18. Wärmeabfuhrsystem nach einem der Ansprüche 1 bis 17,
**dadurch gekennzeichnet**, daß der über eine externe Wärmesenke (24, 28) geführte Tertiärkreis (KIII) des Zwischenkühlers (9) zum Betrieb nach dem Naturumlaufprinzip eingerichtet ist.

19. Wärmeabfuhrsystem nach Anspruch 18,
**gekennzeichnet durch** einen Naturzugkühlturm bzw. Luftkühler (24) als externe Wärmesenke.

## Claims

1. Heat dissipation system for a nuclear reactor, in particular for a pressurised-water reactor, having a containment shell (100), which is surrounded by a concrete construction of a reactor building (5) and in turn surrounds the nuclear reactor as a containment (2), wherein
a) the containment shell (100) has, in a lower region, a sump volume (3) for receiving cooling water (4),
b) cooling pipes (6) of a sump cooler (SC; SC1, SC2) are arranged inside the sump volume (3) in such a way that they are covered on the primary side by cooling water (4) at least when the sump volume (3) is filled to a considerable extent,
c) the secondary side (KII) of the cooling pipes (6) is connected by way of feed lines and return lines (7, 12; 8, 11) of the sump cooler (SC; SC1; SC2) to an intermediate cooler (9),
d) the tertiary side of the intermediate cooler (9) is connected to a heat sink (24; 28) which is arranged outside the reactor building (5).

2. Heat dissipation system according to claim 1, characterised in that the sump volume (3) contains a supply of boric acid solution.

3. Heat dissipation system according to claim 1 or 2, characterised in that a chamber space which delimits the sump volume (3) is covered by means of a ceiling construction (15).

4. Heat dissipation system according to claim 3, characterised in that the cooling pipes (6) of the sump cooler (SC) are held on the ceiling construction (15).

5. Heat dissipation system according to claim 3 or 4, characterised in that the ceiling construction (15) is constructed as a load-bearing steel construction.

6. Heat dissipation system according to claim 3 or 4, characterised in that the ceiling construction (15) is constructed as a steel-reinforced, load-bearing concrete cover.

7. Heat dissipation system according to one of the claims 1 to 6, characterised in that the cooling pipes (6) of the sump cooler (SC) are provided in multi-strand arrangement.

8. Heat dissipation system according to one of the claims 1 to 7, characterised in that the sump cooler (SC) with its cooling pipes (6) is constructed and arranged within a rising height corresponding to a chamber space in such a way that a natural circulation flow is formed in cooling mode.

9. Heat dissipation system according to claim 8, characterised in that in order to assist the natural circulation, guide devices (25) are allocated to the cooling pipes (6), in order that shaft-like flow zones (26) are formed for an upward flow in heat exchange with the cooling pipes (6), and beyond these flow zones, downward flow zones (27) are formed.

10. Heat dissipation system according to one of the claims 1 to 9, characterised in that the intermediate cooler (9) is arranged outside the containment shell (100) and the feed lines and return lines (7, 12; 8, 11) of the sump cooler (SC, SC1, SC2) are led through the wall (1) of the containment shell (100) to the intermediate cooler (9).

11. Heat dissipation system according to claim 10, characterised in that the feed lines and return lines (7, 12; 8, 11) can each be shut off and for this purpose are advantageously provided, in a line region which is laid outside the containment shell (100), with at least one respective shut-off valve (21, 22).

12. Heat dissipation system according to one of the claims 1 to 11, characterised in that means (10, 11, 12) are provided for circulating the cooling water (4) in the intermediate cooling circuit through sump cooler (SC) and intermediate cooler (9).

13. Heat dissipation system according to claim 12, characterised in that an intermediate cooling pump (10) is connected in the intermediate cooling circuit (KII) which is formed by the sump cooler (SC) and intermediate cooler (9) and the feed lines and return lines (7, 12; 8, 11) which connect the two coolers (SC, 9).

14. Heat dissipation system according to claim 13, characterised in that the intermediate cooling pump (10) is inserted into a branch (12) of the return line, which branch lies outside the containment shell (100) as well as between a shut-off valve (21) and the secondary-side inlet (9.1) of the intermediate cooler (9).

15. Heat dissipation system according to claim 13 or 14, characterised in that shut-off valves (21, 22), intermediate cooler (9), intermediate cooling pump (10) and the connecting circulation lines (11, 12) are arranged inside a reactor building annulus (5.0), which lies outside the containment shell (100) and inside the reactor building (5).

16. Heat dissipation system according to one of the claims 1 to 15, characterised in that the tertiary side (KIII) of the intermediate cooler (9) is connected by way of a recirculating pump (23) and corresponding feed lines and return lines (13, 14) to the external heat sink, for example a river or cooling pond.

17. Heat dissipation system according to one of the claims 1 to 16, characterised by the recirculation of the coolant in the intermediate cooling circuit (KII) according to the natural circulation principle in the case of appropriately provided geodetic height of the intermediate cooler (9) relative to the sump cooler (SC1, SC2).

18. Heat dissipation system according to one of the claims 1 to 17, characterised in that the tertiary circuit (KIII) of the intermediate cooler (9) that is routed via an external heat sink (24, 28) is set up for operation according to the natural circulation principle.

19. Heat dissipation system according to claim 18, characterised by a natural draught cooling tower or air cooler (24) as an external heat sink.

## Revendications

1. Système de dissipation de chaleur pour un réacteur nucléaire, notamment pour un réacteur à eau sous pression, comportant une enceinte (100) de confinement, qui est entourée d'une construction en béton d'un bâtiment (5) de réacteur et qui entoure pour sa part le réacteur nucléaire en tant qu'enceinte (2) de confinement,
a) l'enceinte (100) de confinement comporte dans une zone inférieure un volume (3) de bain pour la réception d'eau (4) de refroidissement,
b) des tuyaux (6) de refroidissement d'un refroidisseur (SC;SC1,SC2) de bain sont disposés dans le volume (3) de bain, de sorte à être recouverts du côté primaire d'eau (4) de refroidissement au moins lorsque le volume (3) de bain est bien rempli,
c) le côté secondaire (XII) des tuyaux (6) de refroidissement communique par l'intermédiaire de conduites (7,12;8,11) aller et retour du refroidisseur (SC;SC1;SC2) de bain avec un refroidisseur (9) intermédiaire,
d) le refroidisseur intermédiaire (9) communique du côté tertiaire avec un puits (24;28) de chaleur monté à l'extérieur du bâtiment (5) du réacteur.

2. Système de dissipation de chaleur suivant la revendication 1,
caractérisé en ce que le volume (3) de bain contient une réserve d'eau au bore.

3. Système de dissipation de chaleur suivant la revendication 1 ou 2,
caractérisé en ce qu'une chambre délimitant le volume (3) de bain est recouverte d'une construction formant plafond.

4. Système de dissipation de chaleur suivant la revendication 3,
caractérisé en ce que les tuyaux (6) de refroidissement du refroidisseur (SC) de bain sont fixés à la construction (15) formant plafond.

5. Système de dissipation de chaleur suivant la revendication 3 ou 4,
caractérisé en ce que la construction (15) formant plafond est formée d'une charpente métallique portante.

6. Système de dissipation de chaleur suivant la revendication 3 ou 4,
caractérisé en ce que la construction (15) formant plafond est sous forme de plafond portant en béton armé.

7. Système de dissipation de chaleur suivant l'une des revendications 1 à 6,
caractérisé en ce que les tuyaux (6) de refroidissement du refroidisseur (SC) de bain sont prévus en plusieurs tronçons.

8. Système de dissipation de chaleur suivant l'une des revendications 1 à 7,
caractérisé en ce que les tuyaux (6) de refroidissement du refroidisseur (SC) de bain ont une forme telle et sont montés dans une chambre de hauteur de plafond appropriée de telle sorte qu'il se forme en fonctionnement de refroidissement un courant de circulation naturelle.

9. Système de dissipation de chaleur suivant la revendication 8,
caractérisé en ce que pour faciliter la circulation naturelle, des dispositifs (25) de direction sont associés aux tuyaux (6) de refroidissement, de sorte que des zones (26) d'écoulement du type puits soient formées pour un courant ascensionnel en échange thermique avec les tuyaux (6) de refroidissement et que des zones (27) de courant descendant soient formées à l'extérieur de ces zones d'écoulement.

10. Système de dissipation de chaleur suivant l'une des revendications 1 à 9,
caractérisé en ce que le refroidisseur intermédiaire (9) est monté à l'extérieur de l'enceinte (100) de confinement et les conduites aller et retour (7,12;8,11) du refroidisseur (SC,SC1,SC2) de bain vont au refroidisseur (9) intermédiaire en traversant la paroi (1) de l'enceinte (100) de confinement .

11. Système de dissipation de chaleur suivant la revendication 10,
caractérisé en ce que les conduites aller et retour (7,12;8,11) peuvent chacune être obturées et sont chacune munies à cet effet d'au moins une vanne (21, 22) d'arrêt de préférence dans une zone de la conduite se trouvant à l'extérieur de l'enceinte (100) de confinement.

12. Système de dissipation de chaleur suivant l'une des revendications 1 à 11,
caractérisé en ce qu'il est prévu des moyens (10,11,12) pour faire circuler l'eau (4) de refroidissement dans le circuit de refroidissement intermédiaire au travers du refroidisseur de bain et du refroidisseur intermédiaire (SC;9).

13. Système de dissipation de chaleur suivant la revendication 12,
caractérisé en ce qu'une pompe (10) de refroidissement intermédiaire est branchée dans le circuit (KII) intermédiaire formé par le refroidisseur de bain et le refroidisseur intermédiaire (SC,9) et par les conduites (7,12;8,11) aller et retour reliant les deux refroidisseurs (SC;9).

14. Système de dissipation de chaleur suivant la revendication 13,
caractérisé en ce que la pompe (10) de refroidissement intermédiaire est insérée dans un bras (12) de la conduite de retour, qui se trouve à l'extérieur de l'enceinte (100) de confinement ainsi qu'entre une vanne (21) d'arrêt et l'admission (9.1) du côté secondaire du refroidisseur intermédiaire (9).

15. Système de dissipation de chaleur suivant la revendication 13 ou 14,
caractérisé en ce que les vannes (21,22) d'arrêt, le refroidisseur intermédiaire (9), la pompe (10) de refroidissement intermédiaire et les conduites (11,12) du circuit les reliant sont montés dans une chambre (5.0) annulaire du bâtiment du réacteur, qui se trouve à l'extérieur de l'enceinte (100) de confinement et à l'intérieur du bâtiment (5) du réacteur.

16. Système de dissipation de chaleur suivant l'une des revendications 1 à 15,
caractérisé en ce que le côté tertiaire (KIII) du refroidisseur intermédiaire (9) communique par l'intermédiaire d'une pompe (23) de circulation et de conduites (13,14) correspondantes aller et retour avec le puits extérieur de chaleur, par exemple avec un fleuve ou avec un bassin de refroidissement.

17. Système de dissipation de chaleur suivant l'une des revendications 1 à 16,
caractérisé par la circulation du fluide de refroidissement dans le circuit (XII) de refroidissement intermédiaire suivant le principe de circulation naturelle pour une hauteur géodésique prévue de manière appropriée du refroidisseur intermédiaire (9) par rapport au refroidisseur (SC1,SC2) de bain.

18. Système de dissipation de chaleur suivant l'une des revendications 1 à 17,
caractérisé en ce que le circuit tertiaire (KIII) passant par un puits (24,28) extérieur de chaleur, du refroidisseur intermédiaire (9) est installé pour fonctionner suivant le principe de la circulation naturelle.

19. Système de dissipation de chaleur suivant la revendication 18,
caractérisé par une tour de refroidissement à tirage naturel ou un refroidisseur à air (24) en tant que puits extérieur de chaleur.
